# EUROPÄISCHE PATENTSCHRIFT

(11) **EP 0 599 073 B1**
(45) Veröffentlichungstag und Bekanntmachung des Hinweises auf die Patenterteilung: **20.12.1995**
(21) Anmeldenummer: 93117459.3
(22) Anmeldetag: 28.10.1993
(51) Int. Cl.: B62D 1/18

(54) **Verstellbare Lenksäule für Kraftfahrzeuge**
Adjustable steering column for motor vehicles
Colonne de direction réglable pour véhicules à moteur

(30) Priorität: 17.11.1992 DE 4238732
(43) Veröffentlichungstag der Anmeldung: 01.06.1994
(73) Patentinhaber: LEMFOERDER METALLWAREN AG., D-49441 Lemförde (DE); Bayerische Motoren Werke Aktiengesellschaft, 80788 München (DE)
(72) Erfinder: Schäfer, Burkhard, D-28816 Stuhr (DE); Grams, Kai-Uwe, D-49692 Cappeln (DE); Vortmeyer, Jens, D-32361 Preussisch Oldendorf (DE); Hagemann, Georg, D-49356 Diepholz (DE); Jaegermeyr,Eduard, D-85368 Moosburg (DE); Promberger, Franz, D-85288 Petershausen (DE); Egartner, Walter, D-80809 München (DE)
(74) Vertreter: Bruse, Willy Hans Heinrich

(56) Entgegenhaltungen:
- EP-A- 0 417 730
- WO-A-88/10205
- DE-A- 3 732 817
- DE-C- 3 536 285
- US-A- 4 691 587
- US-A- 4 878 394
- RESEARCH DISCLOSURE, Bd.315, Nr.26, 20. Juni 1990, NEW YORK, USA Seite 552 ANONYMOUS 'Hydraulic lock for tilt/telescoping steering column assembly'

## Beschreibung

Die Erfindung betrifft eine verstellbare Lenksäule für Kraftfahrzeuge nach dem Oberbegriff des Patentanspruches 1.

Diese Gattungsmerkmale sind aus der DE 35 36 285 -C1- bekannt. Eine solche Anordnung ermöglicht eine stufenlose Längen- und Höhenverstellung des auf dem oberen Ende einer Lenkwelle montierten Lenkrades sowie die Verriegelung der eingestellten Lenkradposition durch hydraulische Verblockung der Kolben in den Zylindern der Kolben-Zylinder-Einheiten. Bei der in Figur 3 dieser Druckschrift dargestellten Variante sind hydraulisch wirksame Kolben-Zylinder-Einheiten unter einem Winkel von etwa 90° versetzt zueinander angeordnet, mit den einen Enden gemeinsam an das verstellbare Gehäuse, in dem die Lenkwelle drehbar gelagert ist, angelenkt, und mit dem jeweils anderen Ende ist die eine Kolben-Zylinder-Einheit gelenkig mit einem karosseriefesten Bauteil und die andere Kolben-Zylinder-Einheit mit einem unteren, gegen Verschiebung in Längsrichtung festgelegten Gehäuse verbunden. Die bekannte Anordnung benötigt viel Bauraum zur Unterbringung und gesonderte Betätigungsorgane für beide Kolben-Zylinder-Einheiten.

Aus der DE 37 32 817 -A1- ist es bekannt, durch zwei mit ihren Achsen parallel zur Längsachse der Lenksäule ausgerichtete Schraubenspindeln sowohl eine axiale Verstellung als auch eine Schwenkbarkeit zu realisieren.

Aufgabe der Erfindung ist eine Weiterbildung der Anordnung nach dem Gattungsbegriff zur Verringerung des für die Unterbringung benötigten Bauraumes und zur Betätigung der beiden Kolben-Zylinder-Einheiten durch ein einziges Betätigungsorgan.

Die Erfindung löst diese Aufgabe durch Ausbildungsmerkmale nach dem Kennzeichen des Patentanspruches 1.

Es ist ein wesentlicher Vorteil dieser Ausbildungsmerkmale, daß die beiden für die hydraulische Verblockung der eingestellten Lenkradposition dienenden Kolben-Zylinder-Einheiten auf engstem Raum unterhalb der Lenksäule in einer parallelen Lage zueinander untergebracht werden können, so daß Mittel zur Verblockung und Entriegelung der beiden Kolben-Zylinder-Einheiten durch ein einziges Bedienungsorgan betätigbar sind. Bevorzugt wird ein Halter aus Blechformteilen, so daß eine u-förmige Halterausbildung das Gehäuse von oben übergreift und ein aus Blech bestehender Winkelhebel im Querschnitt durch die Längsachse der Lenksäule ebenfalls als ein u-förmiger Blechbügel ausgebildet und in dem Halter um eine Querachse schwenkbar gelagert ist. Dies ermöglicht eine sichere Übertragung großer Kräfte, wie sie beispielsweise beim Aufprall eines Fahrzeuges entstehen und übertragen werden müssen, um beispielsweise die Wirkung eines Airbags zu gewährleisten.

In der Zeichnung ist ein Ausführungsbeispiel der Erfindung dargestellt. Es zeigen:
- Figur 1: eine Seitenansicht des oberen Endes einer Lenksäule für Kraftfahrzeuge,
- Figur 2: einen Querschnitt nach der Linie A - A in Figur 1,
- Figur 3: einen Querschnitt nach der Linie B - B in Figur 1 und
- Figur 4: einen Querschnitt nach der Linie C - C in Figur 1.

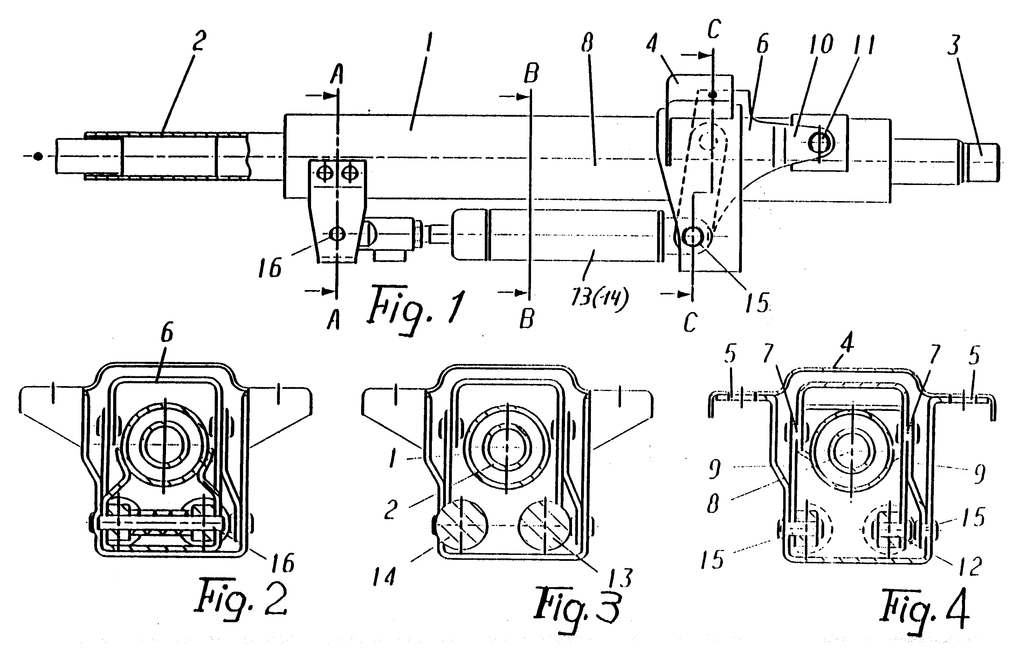

In dem Ausführungsbeispiel ist in einem Gehäuse 1 das obere Ende einer aus zueinander verschiebbaren Teilen zusammengesetzten Lenkwelle 2 gelagert, deren unteres Ende über ein Kreuzgelenk oder dergleichen mit dem Lenkgetriebe verbunden und auf deren oberes Ende 3 das Lenkrad befestigt ist. In dem Gehäuse 1 ist das obere Ende der Lenkwelle 2 drehbar, jedoch axial unverschieblich, gelagert. Das Gehäuse 1 ist seinerseits in einem an der Karosserie fest angebrachten Halter 4 abgestützt, welcher aus Blechformteilen gebildet und mit der Karosserie durch Schrauben verbindbar ist, die die in den Figuren 2 bis 4 dargestellten Öffnungen 5 durchdringen. Der Halter 4 übergreift mit einer u-förmigen Ausbildung das Gehäuse 1 von oben. Zur Erzielung einer größeren Festigkeit ist der Halter 4 im Ausführungsbeispiel im Querschnitt entsprechend Figur 4 kastenprofilartig aufgebaut. Innerhalb des Halters 4 ist ein weiterer U-Bügel 6 mittels Zapfen 7 um eine Achse quer zur Längsachse 8 der Lenksäule schwenkbar gelagert. Aus konstruktiven Gründen sind diese Zapfen 7 innerhalb des Halters 4 in den oberen Enden von Streben 9 abgestützt, die ihrerseits mit dem Halter 4 fest verbunden sind. In der Seitenansicht ist dieser U-Bügel 6 beidseitig als Winkelhebel 10 ausgebildet und mittels Zapfen 11 gelenkig und axial begrenzt beweglich mit dem Gehäuse 1 verbunden und dessen anderer Arm einseitig um einen Zapfen 12 gelenkig mit dem einen Ende einer Kolben-Zylinder-Einheit 13 verbunden ist. Parallel zu dieser Kolben-Zylinder-Einheit und parallel zur Längsachse 8 der Lenksäule ist eine zweite Kolben-Zylinder-Einheit 14 vorgesehen, deren eines Ende um einen Zapfen 15 gelenkig mit dem Halter 4 verbunden ist. Die anderen Enden beider Kolben-Zylinder-Einheiten 13 und 14 sind um einen Zapfen 16 gelenkig mit dem Gehäuse 1 verbunden. Die beschriebene Anordnung ermöglicht eine Schwenkbewegung des oberen Lenkwellenendes 3 um die Achse der Zapfen 7 bei entsprechender Längenänderung der entriegelten Kolben-Zylinder-Einheit 13 und außerdem eine Längsverschiebung des Gehäuses 1 um die Achse der Zapfen 15 bei entriegelter Kolben-Zylinder-Einheit 14. Sind beide Kolben-Zylinder-Einheiten 13 und 14 entriegelt, kann das Lenkrad durch Schwenk- und Schiebebewegung stufenlos verstellt werden, so daß die eingestellte Position durch Verriegelung der beiden Kolben-Zylinder-Einheiten 13 und 14 arretiert werden kann. Die Entriegelung und Verriegelung der beiden Kolben-Zylinder-Einheiten 13 und 14 kann durch ein einziges Betätigungsorgan erfolgen. Bevorzugt wird die Verwendung von handelsüblichen hydraulischen Verblockungseinheiten, bei denen eine Vorspannung durch ein Gasdruckpolster vorgesehen ist. Solche Verblockungseinheiten bestehen aus einem mit Flüssigkeit gefüllten Zylinder und einem darin angeordneten Kolben, dessen Kolbenstange einseitig aus dem Zylinder herausgeführt ist, sowie einem weiteren, den flüssigkeitsgefüllten Zylinderraum begrenzenden Kolben, der sich auf der gegenüberliegenden Seite gegen ein vorgespanntes Gasdruckpolster abstützt. In dem von Flüssigkeit umspülten Kolben ist ein Ventil angeordnet, dessen Betätigungsmittel über Kanäle in der Kolbenstange bedienbar sind, so daß die Ventile in beiden Kolben der Kolben-Zylinder-Einheiten 13 und 14 durch ein gemeinsames Betätigungsorgan zur Verriegelung und Entriegelung der Kolben-Zylinder-Einheit geschlossen bzw. geöffnet werden können. Kolben-Zylinder-Einheiten mit diesen Ausbildungsmerkmalen sind bekannt und somit nicht Gegenstand der Erfindung.

### BEZUGSZEICHENLISTE:

- 1: Gehäuse
- 2: Lenkwelle
- 3: Oberende Lenkwelle
- 4: Halter
- 5: Öffnung
- 6: U-Bügel
- 7: Zapfen
- 8: Längsachse
- 9: Strebe
- 10: Winkelhebel
- 11: Zapfen
- 12: Zapfen
- 13: Kolben-Zylinder-Einheit
- 14: Kolben-Zylinder-Einheit
- 15: Zapfen
- 16: Zapfen

## Patentansprüche

1. Verstellbare Lenksäule für Kraftfahrzeuge, bei der eine aus teleskopisch zueinander verschiebbaren Teilen zusammengesetzte und an ihrem oberen Ende mit dem Lenkrad verbundene Lenkwelle (2) drehbar in einem Gehäuse (1) gelagert und dieses Gehäuse (1) in einem an der Karosserie festen Halter (4) sowohl um eine Querachse (15) schwenkbar als auch gegenüber der Karosserie in Längsrichtung der Lenksäule verschiebbar abgestützt sowie durch zwei hydraulisch wirksame Kolben-Zylinder-Einheiten (13,14) stufenlos einstellbar ist, die beide einerseits an das Gehäuse (1) angelenkt sind und von denen andererseits eine (14) gelenkig mit dem Halter (4) verbunden ist, dadurch gekennzeichnet, daß die andere (13) der beiden Kolben-Zylinder-Einheiten über einen im Halter (4) um eine Querachse (7) gelagerten Winkelhebel (10) andererseits gelenkig mit dem Gehäuse (1) verbunden ist und beide Kolben-Zylinder-Einheiten (13,14) etwa parallel zur Längsachse (8) der Lenksäule ausgerichtet sind.

2. Lenksäule nach Anspruch 1, dadurch gekennzeichnet, daß der an der Karosserie feste Halter (4) aus Blechformteilen besteht, das Gehäuse (1) mit einer u-förmigen Ausbildung von oben übergreift und der Winkelhebel im Querschnitt zur Längsachse (8) ebenfalls als ein in dem Halter (4) um eine Querachse (7) schwenkbar gelagerter U-Bügel (6) ausgebildet ist.

3. Lenksäule nach den Ansprüchen 1 und 2, dadurch gekennzeichnet, daß die Kolben-Zylinder-Einheiten (13,14) eine Gasdruckvorspannung aufweisen.

4. Lenksäule nach den Ansprüchen 1 bis 3, dadurch gekennzeichnet, daß die Kolben-Zylinder-Einheiten (13,14) in ihren Kolben Ventile aufweisen, die über Kanäle in der einseitig aus dem Zylinder herausgeführten Kolbenstange betätigbar sind.

## Claims

1. Adjustable steering column for motor vehicles, in which a steering shaft (2), which comprises parts telescopically displaceable relative to one another and is connected at its top end to the steering wheel, is supported rotatably in a housing (1) and said housing (1) is supported in a holder (4), which is fixed to the car body, so as to be both capable of swivelling about a transverse axis (15) and displaceable relative to the car body in a longitudinal direction of the steering column and is continuously adjustable by means of two, hydraulically operated piston/cylinder units (13, 14), which are both coupled at one end to the housing (1) and one (14) of which is hinge-connected at the other end to the holder (4), characterized in that the other (13) of the two piston/cylinder units is hinge-connected at the other end to the housing (1) by an angle level (10), which is supported in the holder (4) about a transverse axis (7), and both piston/cylinder units (13, 14) are aligned substantially parallel to the longitudinal axis (8) of the steering column.

2. Steering column according to claim 1, characterized in that the holder (4) fixed to the car body comprises shaped sheet metal parts and engages with a U-shaped construction over the housing (1) from above and the angle lever in cross-section through the longitudinal axis (8) likewise takes the form of a U-shaped clip (6), which is supported in the holder (4) so as to be capable of swivelling about a transverse axis (7).

3. Steering column according to claims 1 and 2, characterized in that the piston/cylinder units (13, 14) have a gas pressure initial tension.

4. Steering column according to claims 1 to 3, characterized in that the piston/cylinder units (13, 14) have, in their pistons, valves which are operable via channels in the piston rod which extends at one end out of the cylinder.

## Revendications

1. Colonne de direction réglable pour véhicules à moteur ayant un arbre de direction (2) composé de pièces téléscospiquement mobiles les unes par rapport aux autres et relié par son extrémité supérieure au volant, cet arbre étant monté rotatif dans un boîtier (1), ce boîtier (1) étant soutenu dans un support (4) solidaire de la carrosserie, de manière à être apte aussi bien à pivoter autour d'un axe transversal (15) qu'à glisser par rapport à la carrosserie dans le sens longitudinal de la colonne de direction, et étant réglable progressivement grâce à deux ensembles piston-cylindre (13, 14) agissant hydrauliquement, lesdits ensembles étant tous deux, d'une part, articulés au boîtier (1) et l'un d'eux (14), d'autre part, étant articulé au support (4), caractérisée en ce que l'autre (13) des deux ensembles piston-cylindre est relié, au boîtier (1) d'autre part, par un levier coudé (10), articulé au support (4) autour d'un axe transversal (7), et en ce que les deux ensembles piston-cylindre (13, 14) sont disposés sensiblement parallèlement à l'axe longitudinal (8) de la colonne de direction.

2. Colonne de direction selon la revendication 1, caractérisée en ce que le support (4) solidaire de la carrosserie est en tôle préformée et chevauche le boîtier (1) par le haut par un élément en forme de U, et en ce que le levier coudé est également formé, en coupe transversale de l'axe longitudinal (8), comme un étrier en forme de U (6) logé dans le boîtier (4) et susceptible de pivoter autour d'un axe transversal (7).

3. Colonne de direction selon les revendications 1 à 2, caractérisée en ce que les ensembles piston-cylindre (13, 14) présentent une prétension du gaz comprimé.

4. Colonne de direction selon les revendications 1 à 3, caractérisée en ce que les pistons des ensembles piston-cylindre (13, 14) sont munis de soupapes qui sont susceptibles d'être actionnées par des canaux pratiqués dans la tige du piston sortie sur un côté du cylindre.
